# EUROPÄISCHE PATENTSCHRIFT

(11) **EP 1 275 185 B1**
(45) Veröffentlichungstag und Bekanntmachung des Hinweises auf die Patenterteilung: **19.08.2009**
(21) Anmeldenummer: 01921221.6
(22) Anmeldetag: 20.03.2001
(51) Int. Cl.: H02J 3/00

(54) **RECHNERGESTÜTZTES PRÜFVERFAHREN FÜR EIN LEITUNGSSYSTEM**
COMPUTER-ASSISTED TESTING METHOD FOR A WIRING SYSTEM
PROCEDE INFORMATIQUE DE VERIFICATION D'UN SYSTEME DE LIGNES ELECTRIQUES

(30) Priorität: 20.03.2000 DE 10013521
(43) Veröffentlichungstag der Anmeldung: 15.01.2003
(73) Patentinhaber: SIEMENS AKTIENGESELLSCHAFT, 80333 München (DE)
(72) Erfinder: KRESS, Toni, 91207 Lauf (DE); LOUIS, Michael, 90443 Nürnberg (DE); PANTENBURG, Norbert, 90469 Nürnberg (DE); TURNAUS, Andre, 90408 Nürnberg (DE); WALTER, Dieter, 91093 Hessdorf (DE)
(86) Internationale Anmeldenummer: PCT/DE2001/001072
(87) Internationale Veröffentlichungsnummer: WO 2001/071880

(56) Entgegenhaltungen:
- JINQIU SHAO ET AL: "AN EXPERT SYSTEM FOR SECONDARY DISTRIBUTION SYSTEM DESIGN" IEEE TRANSACTIONS ON POWER DELIVERY, IEEE INC. NEW YORK, US, Bd. 6, Nr. 4, 1. Oktober 1991 (1991-10-01), Seiten 1607-1615, XP000271660 ISSN: 0885-8977

## Beschreibung

Die vorliegende Erfindung betrifft ein rechnergestütztes Prüfverfahren für ein Leitungssystem, über das eine Anzahl elektrischer Verbraucher aus einem Speisebaustein mit Niederspannung versorgbar sein soll.

Bei industriellen Anlagen, insbesondere Maschinen und Maschinensystemen, muss eine Vielzahl elektrischer Niederspannungsverbraucher mit elektrischer Energie versorgt werden. Die Verbraucher sind oftmals, aber nicht ausschließlich Ein- oder Dreiphasen-Wechselspannungsmotoren. Auch eine Versorgung mit z. B. 500 V-Gleichspannung ist bekannt.

Früher erfolgte die Energieverteilung zu den Verbrauchern in Schaltschränken, in denen auch der Speisebaustein für die Verbraucher angeordnet war. Ausgehend vom Schaltschrank, wurden separate Leitungen zu den einzelnen Verbrauchern geführt. Die Topologie des Leitungssystems war also sternartig. Aufgrund dieser Topologie, nämlich einer separaten Leitung pro Verbraucher, war die Dimensionierung der Leitung relativ einfach. Sie konnte anhand vergleichsweise einfacher Tabellen auch von Elektroinstallateuren vorgenommen werden.

In letzter Zeit werden die elektrischen Verbraucher mehr und mehr über bus- bzw. netzähnliche Leitungssysteme mit dem Speisebaustein verbunden. Vom Speisebaustein geht also ein Sammelabschnitt des Leitungssystems ab, über den ein - möglicherweise sogar weiter verzweigtes - Netz zu den einzelnen Verbrauchern geführt ist. Der Sammelabschnitt führt den Summenstrom der geschalteten Verbraucher. Zu den einzelnen Verbrauchern zweigen weitere Abschnitte ab, nachfolgend Einzel- oder Endabschnitte genannt, die den Strom für nur diesen einen Verbraucher führen.

Die Dimensionierung und Prüfung eines derartigen Leitungssystems ist erheblich komplexer und aufwendiger als bei einer sternartigen Topologie. Elektroinstallateure sind hierbei überfordert. Elektroingenieure verfügen zwar prinzipiell über das erforderliche Fachwissen, standardisierte, einfach handhabbare und ohne weiteres anwendbare Bemessungsregeln sind aber nicht vorhanden. Auch Elektroingenieuren ist somit eine ordnungsgemäße Dimensionierung und Prüfung der Dimensionierung nur mit erheblichem Zeitaufwand möglich.

Es ist zwar denkbar, die einzelnen Längen der Abschnitte und die Nennleistungen der Verbraucher einfach aufzusummieren und das Leitungssystem einheitlich so zu dimensionieren, als ob ein einziger Verbraucher mit der Summe der Nennleistungen über eine Leitung mit der Summe der Einzellängen der Abschnitte mit elektrischer Energie versorgt werden müsste. In diesem Fall wäre die Dimensionierung zwar einfach, das Leitungssystem als solches wäre aber höchstwahrscheinlich deutlich überdimensioniert.

Die Aufgabe der vorliegenden Erfindung besteht darin, ein (rechnergesteuertes) Prüfverfahren zu schaffen, mittels dessen die Dimensionierung eines bus- bzw. netzähnlichen Leitungssystems automatisch überprüfbar ist.

Die Aufgabe wird dadurch gelöst,
- dass einem Rechner eine Topologie des Leitungssystems eingegeben wird,
   wobei das Leitungssystem gemäß der Topologie mindestens einen Sammelabschnitt aufweist, der zwischen dem Speisebaustein und mindestens zwei der Verbraucher mindestens einen Einzelabschnitt aufweist, der zwischen dem Sammelabschnitt und diesem Verbraucher, aber keinem weiteren \/erbraucher angeordnet ist,
- dass dem Sammelabschnitt und den Einzelabschnitten zumindest je eine eigene Länge und eine eigener Querschnitt und den Verbrauchern Nennleistungen zugeordnet werden,
- dass anhand der Niederspannung, der Nennleistungen und der Längen in Verbindung mit vorbestimmten Dimensionierungskriterien für jeden Abschnitt geprüft wird, ob der Querschnitt hinreichend dimensioniert ist, wobei im einfachsten Fall umfassen die Dimensionierungskriterienlediglich eine Prüfung der Abschnitte auf Überlastung beiordnungsgemäßem Arbeiten der Verbraucher. Vorzugsweise aberwerden auch Ausnahmebedingungen wie z. B. eine vorbestimmte Überlast, Kurzschluss in den Abschnitten bzw. in den Verbrauchern und/oder ein Spannungsfall mit überprüft.

Für den Fall, dass mindestens zwei dieser Prüfungen ausgeführt werden, erfolgen die Prüfungen dabei vorzugsweise in der oben genannten Reihenfolge.

Wenn gemäß der Topologie mindestens zwei der Verbraucher über einen gemeinsamen Zwischenabschnitt und mindestens ein weiterer Verbraucher nicht über den gemeinsamen Zwischenabschnitt mit dem Sammelabschnitt verbunden sind, werden selbstverständlich auch dem Zwischenabschnitt eine eigene Länge und ein eigener Querschnitt zugeordnet und auch die Dimensionierung des Zwischenabschnitts mit überprüft.

Wenn zuerst Abschnitte, die zusammen mit dem Zwischenabschnitt Verbraucher mit dem Sammelabschnitt verbinden, auf hinreichende Dimensionierung geprüft werden und erst danach Abschnitte, die ohne den Zwischenabschnitt Verbraucher mit dem Sammelabschnitt verbinden, auf hinreichende Dimensionierung geprüft werden, ergibt sich dabei eine besonders effiziente Vorgehensweise.

Es ist möglich, das Prüfverfahren auf die reine Prüfung des Leitungssystems zu beschränken. Vorzugsweise aber nimmt es selbsttätig eine Optimierung der Abschnitte auf minimal hinreichende Dimensionierung vor. Noch besser ist es, wenn die Optimierung der Abschnitte durch Vorgabe eines entsprechenden Steuerbefehls ausgelöst bzw. unterdrückt wird.

Wenn auch den Abschnitten zugeordnete Verlegebedingungen und/oder Betriebstemperaturen eingegeben werden und die Verlegebedingungen und/oder die Betriebstemperaturen bei der Prüfung der Abschnitte auf hinreichende Dimensionierung berücksichtigt werden, ist eine noch weitergehende Überprüfung bzw. Optimierung des Leitungssystems möglich.

Wenn dem Rechner für zumindest einen Teil der Verbraucher je ein dem jeweiligen Verbraucher vorgeordneter Schalt- und Schutzbaustein vorgegeben wird, ist das Prüfverfahren besonders leistungsfähig.

Wenn die Dimensionierungskriterien zumindest teilweise anhand von Schutzparametern der Schalt- und Schutzbausteine bestimmt werden, ist das Prüfungsverfahren für einen Anwender besonders einfach ausführbar.

Wenn die Verbraucher, ggf. auch die Schalt- und Schutzbausteine, aus einem vorgegebenen Katalog selektierbar sind und Verbraucher- bzw. Schalt- und Schutzbausteinparameter, insbesondere die Nennleistung des Verbrauchers bzw. die Schutzparameter des Schalt- und Schutzbausteins, durch die Selektion anhand des Katalogs selbsttätig ermittelt werden, sind die relevanten Eigenschaften der Verbraucher bzw. der Schalt- und Schutzbausteine auf besonders einfache Weise vorgebbar. Darüber hinaus ist durch diese Vorgehensweise gewährleistet, dass die spezifizierten Verbraucher bzw. Schalt- und Schutzbausteine tatsächlich zur Verfügung stehen.

Im einfachsten Fall wird im Falle unzureichender Dimensionierung lediglich eine Fehlermeldung als solche generiert. Vorzugsweise aber ist anhand der Fehlermeldung auch erkennbar, welches Dimensionierungskriterium nicht erfüllt ist und/oder an welcher Stelle eine Fehldimensionierung vorliegt. Denn dann ist für einen Anwender der Fehler leichter korrigierbar.

Die Niederspannung kann wahlweise eine Gleichspannung oder eine Ein- bzw. Dreiphasenwechselspannung sein.

Bei einer Dreiphasenwechselspannung ist es selbstverständlich möglich, auch Einphasenverbraucher an die Dreiphasenwechselspannung anzuschließen.

Wenn mindestens zwei der Verbraucher Einphasenverbraucher sind, werden die Einphasenverbraucher zur Durchführung des Prüfverfahrens auf die Phasen des Leitungssystems verteilt. Denn dann ist die Gesamtbelastung des Drehstromnetzes minimiert. Die Verteilung auf die Phasen wird an den Anwender des Prüfverfahrens ausgegeben.

Wenn zur Prüfung der Abschnitte auf hinreichende Dimensionierung Phasenverschiebungen der in den Verbrauchern fließenden Ströme berücksichtigt werden, ist das Leitungssystem noch genauer prüfbar.

Wenn das geprüfte, ggf. optimierte, Leitungssystem als Datei, insbesondere als ASCII-Datei, hinterlegt wird, ist die Datei mittels jedes Editors lesbar.

Wenn ein Prüfverfahren nach einem der obigen Ansprüche für mindestens zwei Leitungssysteme durchgeführt wird und die Leitungssysteme zumindest den Speisebaustein gemeinsam haben, ist es besonders vielseitig einsetzbar. Denn in der Praxis existieren in der Regel zumindest ein eigentliches Hauptleitungssystem und zwei Hilfsleitungssysteme, von denen eines (wegen NOTAUS) schaltbar und das andere nicht schaltbar ist.

Innerhalb der beiden Hilfsleitungssysteme ist es möglich, dass die Leitungssysteme auch mindestens einen der Verbraucher gemeinsam haben. Im Verhältnis zwischen Hauptleitungssystem zu Hilfsleitungsystemen kommt es häufig vor, dass mindestens einem der Verbraucher des Hauptleitungssystems ein Schalt- und Schutzbaustein vorgeordnet ist und dass der Schalt- und Schutzbaustein ein Verbraucher eines Hilfsleitungssystems ist.

Das Hauptleitungssystem wird in der Regel mit Einphasenwechselspannung von z. B. 230 Volt oder Dreiphasenwechselspannung von z. B. 400 Volt betrieben. Die Hilfsleitungssysteme werden in der Regel entweder mit Gleichspannung von z. B. 24 Volt oder mit Einphasenwechselspannung von z. B. 230 Volt betrieben.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1 + 2: exemplarisch eine Schaltungsanordnung,
- FIG 3: einen Rechneraufbau,
- FIG 4: ein Grundablaufdiagramm,
- FIG 5: einen Ausschnitt von FIG 4 und
- FIG 6 - 10: Details von FIG 5.

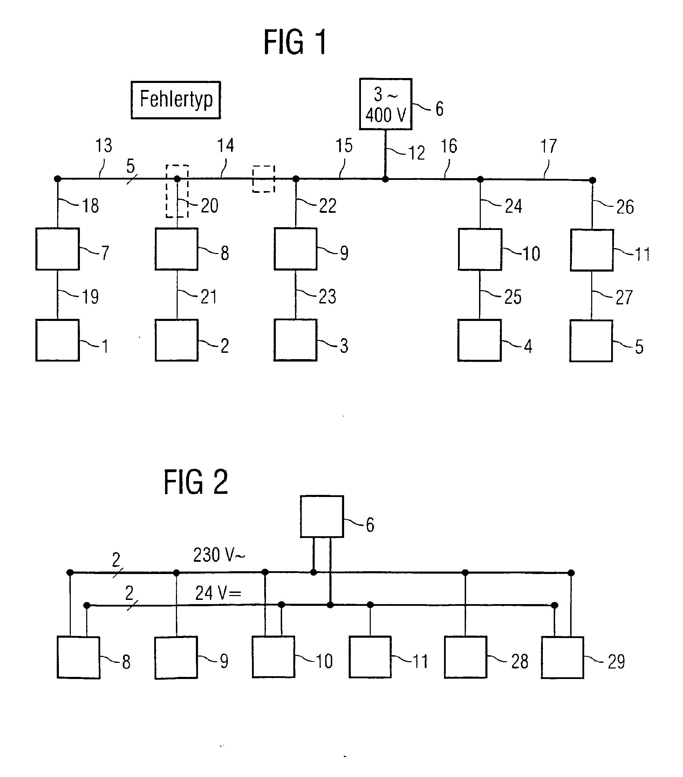

Gemäß FIG 1 sollen (beispielhaft) fünf Hauptverbraucher 1 bis 5 von einem Speisebaustein 6 aus mit elektrischer Energie versorgt werden. Jedem der Hauptverbraucher 1 bis 5 ist ein Schalt- und Schutzbaustein 7 bis 11 vorgeordnet. Die Verbraucher 1 bis 5 sind in der Regel, aber nicht zwangsweise, Motoren. Die Schalt- und Schutzbausteine 7 bis 11 bestehen in der Regel aus einem Schütz, dem ein Leistungsschalter vorgeschaltet ist.

Zur Versorgung der Hauptverbraucher 1 bis 5 mit elektrischer Energie ist ein Hauptleitungssystem vorhanden. Über dieses werden die Hauptverbraucher 1 bis 5 mit einer Hauptniederspannung gespeist. Die Hauptniederspannung ist eine Spannung unter 1 kV, z. B. eine Dreiphasenwechselspannung mit einer Nennspannung von z. B. 400 Volt. In diesem Fall ist es typischerweise 5 adrig ausgebildet (3 Phasen, Nullleiter, Erde).

Gemäß FIG 1 weist das Hauptniederspannungssystem einen Hauptsammelabschnitt 12, Hauptzwischenabschnitte 13 bis 17 sowie Hauptendabschnitte 18 bis 27 auf. Ersichtlich sind dabei die Schalt- und Schutzbausteine 7 bis 11 den Hauptverbrauchern 1 bis 5 vorgeordnet.

Die Schalt- und Schutzbausteine 7 bis 11 sind Hilfsverbraucher, die über Hilfsleitungssysteme mit elektrischer Energie versorgt werden. Die Hilfsleitungssysteme weisen gemäß FIG 2 ersichtlich die gleiche Struktur auf wie das Hauptleitungssystem. Ergänzend ist lediglich anzumerken, dass der Schalt-und Schutzbaustein 7 nicht über diese beiden Hilfsleitungssysteme, sondern anderweitig mit elektrischer Energie versorgt wird. Ferner sind - sozusagen ersatzweise - andere Komponenten 28, 29, die nicht in das Hauptleitungssystem eingeschleift sind, mit einem oder beiden der Hilfsleitungssystemen verbunden. Die anderen Komponenten 28, 29 können z. B. Aktoren oder Sensoren sein. Auch können die Hilfsverbraucher 8 bis 11, 28, 29 mit einem oder mit beiden Hilfsleitungssystemen verbunden sein.

Die Hilfsleitungssysteme führen in der Regel eine niedrigere Spannung als das Hauptleitungssystem. Typische Spannungswerte sind eine Einphasenwechselspannung von z. B. 230 Volt oder eine Gleichspannung von z. B. 24 Volt. In beiden Fällen können die Hilfsleitungssysteme zweiadrig ausgebildet sein.

Die Leitungssysteme haben somit den Speisebaustein 6 gemeinsam. Ferner weisen die Hilfsleitungssysteme gemäß FIG 2 gemeinsame Verbraucher 8, 10, 29 auf. Auch sind die Verbraucher 8 bis 11 der Hilfsleitungssysteme Schalt- und Schutzbausteine 8 bis 11 des Hauptleitungssystems, das in FIG 1 dargestellt ist.

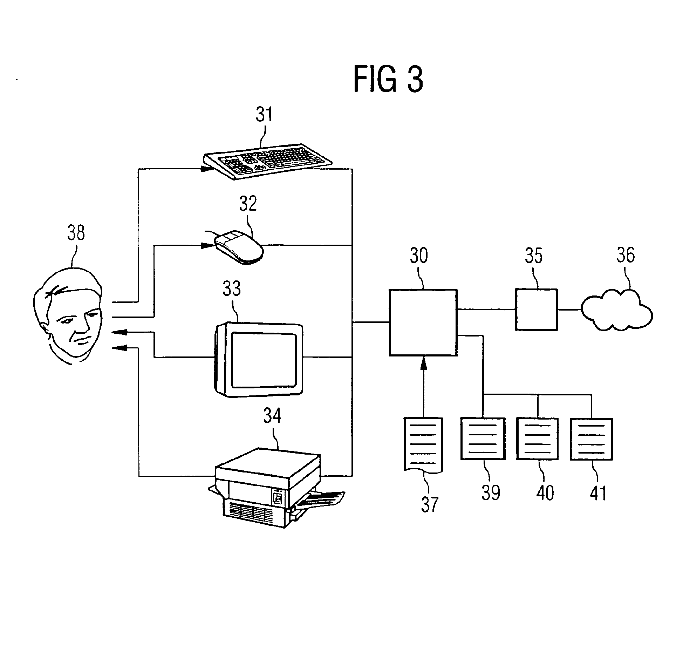

Das erfindungsgemäße Prüfverfahren läuft programmgesteuert auf einem Rechner ab, z. B. einem PC. Dieser weist gemäß FIG 3 die üblichen Komponenten auf. Es sind dies ein Rechnerkern 30, Eingabeeinrichtungen 31, 32 (typisch eine Tastatur 31 und eine Maus 32), Ausgabeeinrichtungen 33, 34 (typisch ein Monitor 33 und ein Drucker 34) sowie ggf. eine Schnittstelle 35 zu einem Rechnernetz 36, z. B. dem Internet. Unter Abarbeitung eines Programms 37, mittels dessen das erfindungsgemäße Prüfverfahren realisiert wird, kommuniziert der Rechner mit einem Anwender 38. Er greift hierbei unter anderem auch auf Dateien 39 bis 41 zu, die vorzugsweise ASCII-Dateien sind.

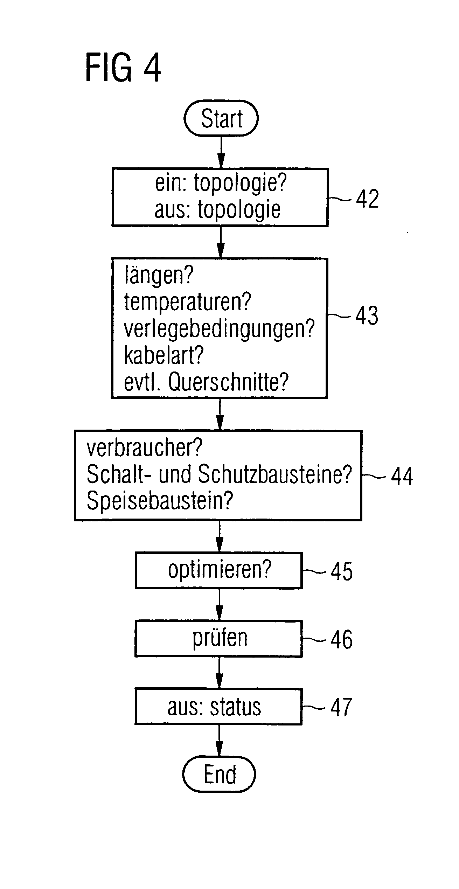

Das erfindungsgemäße Prüfverfahren wird nachstehend in Verbindung mit den FIG 4 bis 10 anhand des Hauptleitungssystems beschrieben.

Gemäß FIG 4 wird zunächst in einem Schritt 42 vom Anwender 38 interaktiv die Topologie des Hauptleitungssystems in den Rechner eingegeben. Der Rechner erzeugt daraufhin auf dem Monitor 33 ein Bild des eingegebenen Hauptleitungssystems. Ferner werden in einem Schritt 43 für jeden der Abschnitte 12 bis 27 die jeweiligen Längen, Betriebstemperaturen und Verlegebedingungen sowie die Kabelart der dort verlegten bzw. zu verlegenden Kabel abgefragt. Die Kabelart umfasst beispielsweise das Material der Mantel- und der Aderisolierung, das Leitermaterial und die Nennspannung, für die das Kabel ausgelegt ist. Die Verlegebedingungen umfassen beispielsweise, ob die Kabel einzeln oder in Gruppen, einlagig oder gebündelt, mit oder ohne Abstand verlegt sind und ob die Verlegung an der Decke, an der Wand, auf dem Fußboden oder in Kabelwannen und dergleichen erfolgt. Ggf. können im Schritt 43 auch die (Mindest-)Querschnitte der einzelnen Abschnitte vorgegeben werden. In diesem Fall erfolgt die Zuordnung der Querschnitte also durch den Anwender 38.

Die Längen und die Betriebstemperaturen sind individuelle Größen, die selbstverständlich nummerisch eingebbar sind. Die Längen können im Einzelfall sehr groß oder sehr klein sein. Sogar eine Länge von Null ist möglich. In diesem Fall besteht der entsprechende Abschnitt nur aus seinen Anschlusselementen bzw. benachbarte Komponenten sind unmittelbar miteinander verbunden. Bezüglich der Verlegebedingungen und der Kabelarten wird vorzugsweise auf die Datei 39 zugegriffen, mittels derer eine Anzahl von Kabelarten und Verlegebedingungen selektierbar ist. Die Datei 39 stellt also zunächst einen Katalog von Kabelarten und Verlegebedingungen zu Verfügung.

Sodann werden in einem Schritt 44 die Hauptverbraucher 1 bis 5, der Speisebaustein 6 sowie die Schalt- und Schutzbausteine 7 bis 11 spezifiziert. Auch hierzu wird vorzugsweise auf die Datei 39 zugegriffen. Diese enthält unter anderem auch einen Katalog selektierbarer Verbraucher, selektierbarer Speisebausteine und selektierbarer Schalt- und Schutzbausteine. Soweit hierbei paramentierbare Elemente selektiert werden, werden sie im Rahmen der Spezifizierung interaktiv parametriert.

Der in der Datei 39 hinterlegte Katalog enthält alle wesentlichen Parameter der selektierbaren Elemente. Sowohl die relevanten Verbraucherparameter, z. B. die Nennleistung eines selektierten Verbrauchers, als auch die relevanten Schalt-und Schutzbausteinparameter als auch die relevanten Parameter des Speisebausteins 6 sind somit durch die Selektion automatisch gegeben. Sie können aufgrund der Selektion anhand des Katalogs selbsttätig durch den Rechner ermittelt werden. Gleiches gilt für die Kabel und die Verlegebedingungen.

Die Schalt- und Schutzbausteinparameter umfassen unter anderem ihren Nennstrom, ihren Überlast- und ihren Kurzschlussfaktor sowie ihre Überlastzeit. Der Kurzschlussfaktor ist der Faktor, bei dem der selektierte Schalt- und Schutzbaustein auch Kurzschluss erkennt und sofort (d. h. binnen weniger Sekunden) den Stromkreis unterbricht. Er liegt üblicherweise zwischen 10 und 20, z. B. bei 12. Der Überlastfaktor ist der Faktor, um den der Strom den Nennstrom übersteigen muss, damit der selektierte Schalt- und Schutzbaustein spätestens nach der Überlastzeit den Stromkreis unterbricht. Der Überlastfaktor liegt typisch im Bereich zwischen 1 und 2, z. B. bei 1,45. Die Überlastzeit beträgt üblicherweise zwischen 30 Minuten und 4 Stunden, z. B. 1 Stunde oder 2 Stunden.

Die Abschnitte 12 bis 27 müssen selbstverständlich nicht nur im Normalbetrieb den gewünschten Nennstrom führen können, sondern sie sollten auch in den Ausnahmezuständen Überlast, Kurzschluss usw. sicher betreibbar sein. Beispielsweise muss ein Kabel für die Überlastzeit den Überlaststrom tragen können. Die Dimensionierungskriterien für die einzelnen Abschnitte 12 bis 27 sind somit auch von den oben erwähnten Schutzparametern der selektierten Schalt- und Schutzbausteine bestimmt.

Schließlich wird in einem Schritt 45 interaktiv abgefragt, ob im Rahmen der Prüfung eine Optimierung des Leitungssystems erfolgen soll.

Sodann wird in einem Schritt 46 die eigentliche Prüfung des Leitungssystems vorgenommen. Die Prüfung erfolgt dabei anhand vorbestimmter Dimensionierungskriterien, auf die nachstehend noch näher eingegangen werden wird. Die erfindungsgemäße Prüfung erfolgt dabei für alle Abschnitte, also sowohl den Sammelabschnitt 12 als auch die Zwischenabschnitte 13 bis 17 als auch die Endabschnitte 18 bis 27. Danach wird in einem Schritt 47 eine Statusmeldung ausgegeben. Ist das Hauptleitungssystem 12 bis 27 hinreichend dimensioniert, erfolgt lediglich eine Ausgabe, dass die Dimensionierung ordnungsgemäß ist. Andernfalls erfolgt im Schritt 47 eine Fehlermeldung.

Die Fehlermeldung des Schrittes 47 umfasst im einfachsten Fall lediglich die Angabe, dass ein Fehler aufgetreten ist, dass also mindestens einer der Abschnitte 12 bis 27 nicht hinreichend dimensioniert ist. Vorzugsweise aber wird - beispielsweise durch entsprechende farbige Markierung oder, wie in FIG 1 angedeutet, durch gestrichelte Einrahmung - angezeigt, an welcher Stelle, hier z. B. im Abschnitt 20, der Fehler aufgetreten ist. Ferner kann z. B. durch Ausgabe eines entsprechenden Fehlertyps dem Anwender 38 mitgeteilt werden, welcher Fehler aufgetreten ist. Auch dies ist in FIG 1 durch das Wort "Fehlertyp" symbolisch angedeutet.

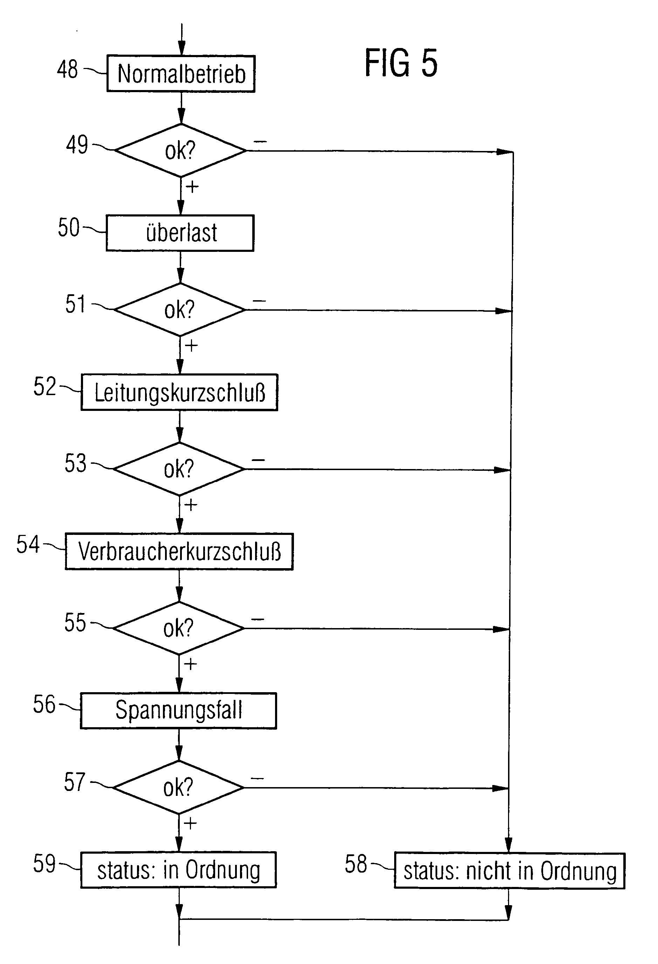

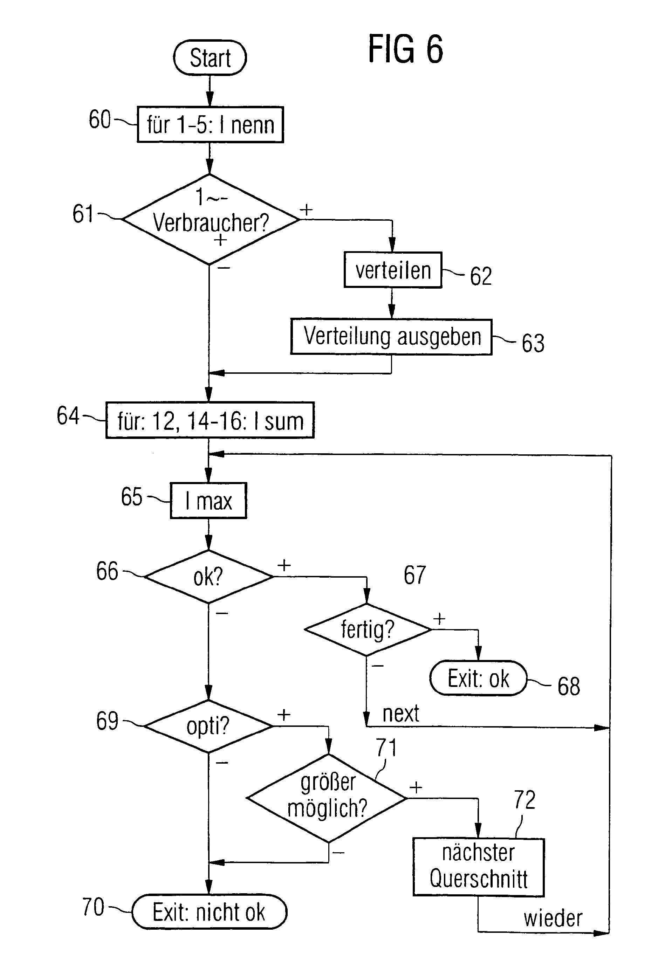

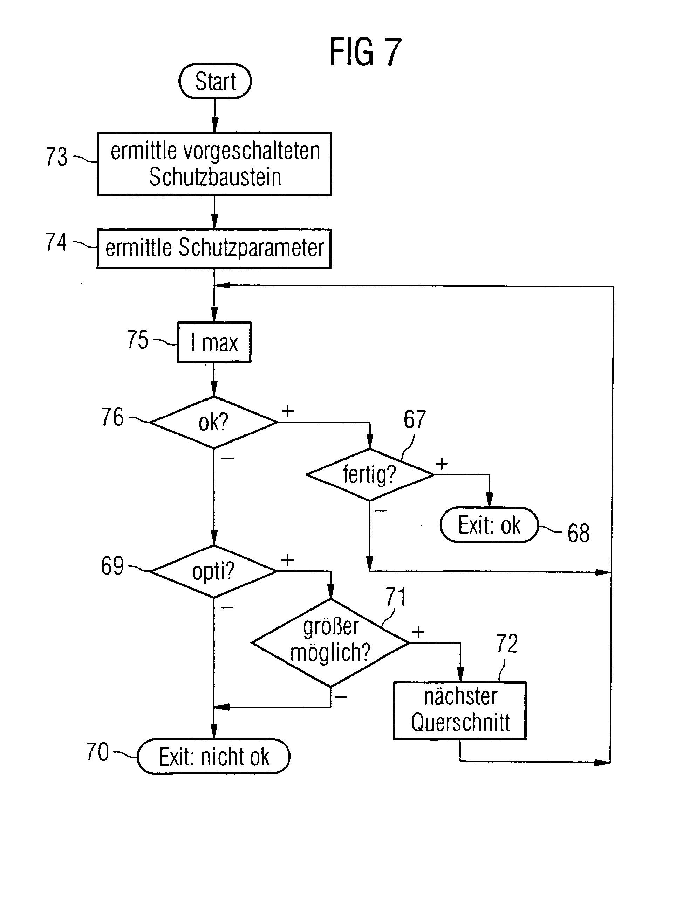

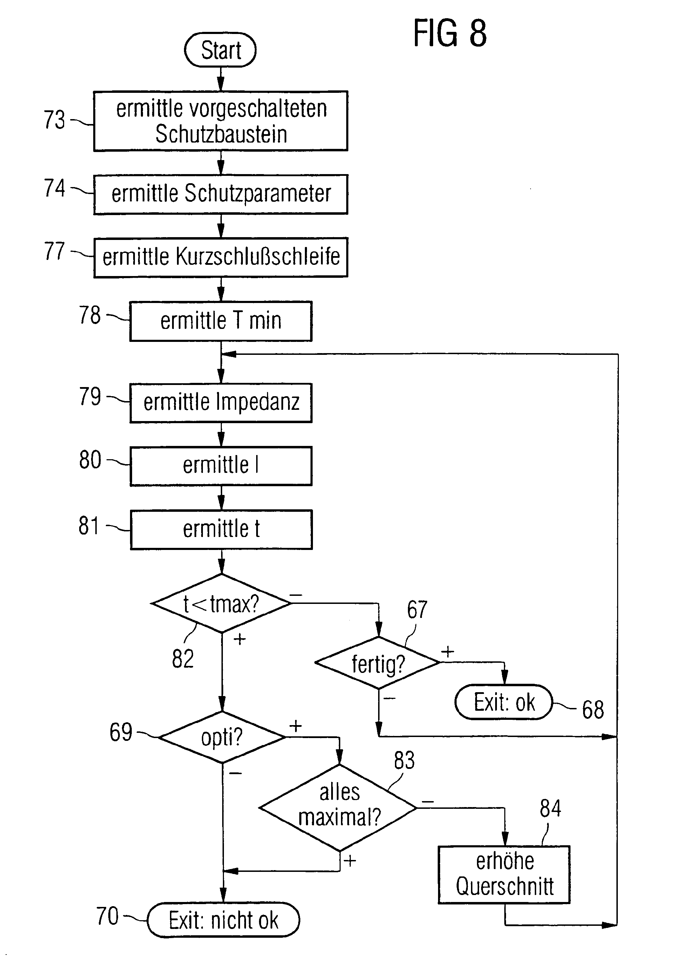

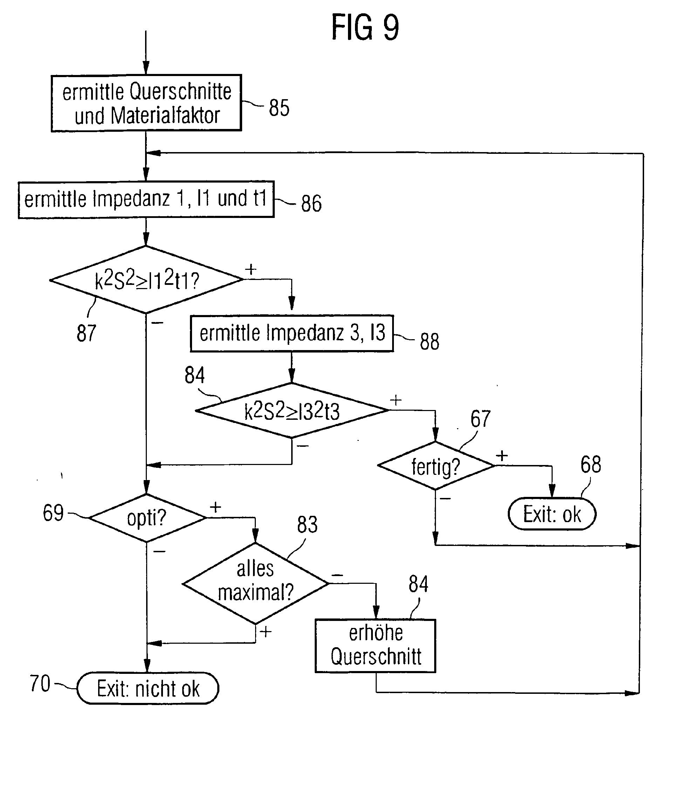

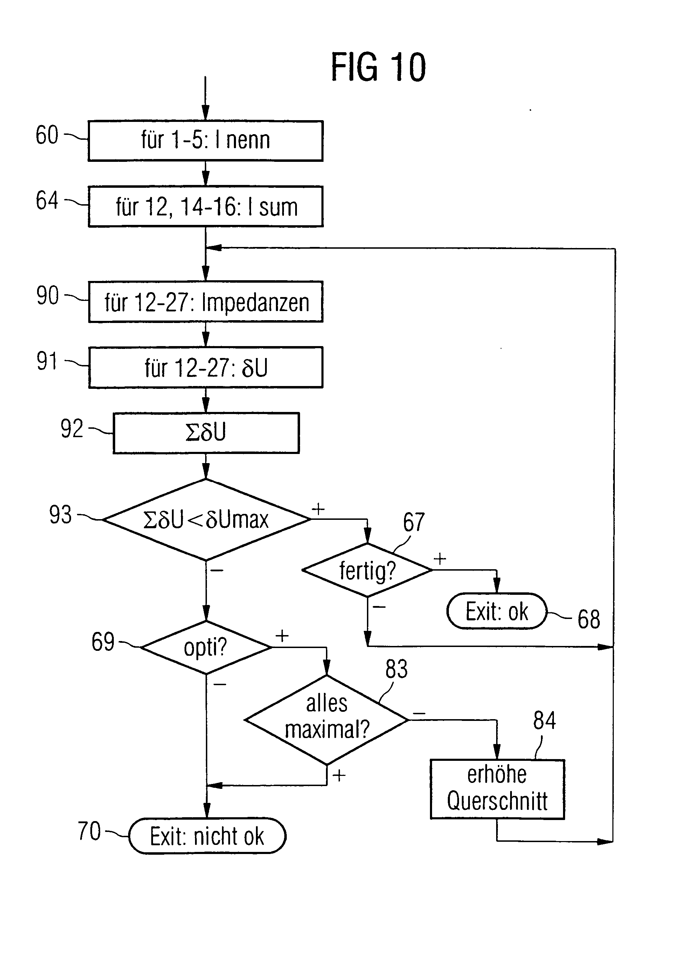

Gemäß FIG 5 umfasst die Prüfung Schritte 48 bis 59. Im Schritt 48 erfolgt eine Prüfung der Abschnitte 12 bis 27 auf Überlastung bei ordnungsgemäßen Arbeiten. Hierauf wird nachstehend in Verbindung mit FIG 6 näher eingegangen. Im Schritt 50 werden die Abschnitte 12 bis 27 auf hinreichende Dimensionierung im Falle einer vorbestimmten Überlast überprüft. Hierauf wird nachstehend in Verbindung mit FIG 7 näher eingegangen. Im Schritt 52 werden die Abschnitte 12 bis 27 auf hinreichende Dimensionierung im Falle eines Leitungskurzschlusses und im Schritt 54 im Falle eines Verbraucherkurzschlusses überprüft. Hierauf wird nachstehend in Verbindung mit FIG 8 und 9 näher eingegangen. Im Schritt 56 schließlich wird der Spannungsfall ermittelt und überprüft, ob er tolerierbar ist, die Abschnitte 12 bis 27 also auch in dieser Hinsicht hinreichend dimensioniert sind. Hierauf wird nachstehend in Verbindung mit FIG 10 näher eingegangen. Die Prüfungskriterien für die Schritte 50, 52, 54 und 56 werden dabei aus der Datei 40 ausgelesen.

Nach jeder Prüfung in den Schritten 48, 50, 52, 54 bzw. 56 wird in den darauffolgenden Schritten 49, 51, 53, 55 bzw. 57 überprüft, ob die jeweilige Prüfung erfolgreich abgeschlossen wurde. Nur im Falle einer erfolgreichen vorangegangenen Prüfung werden nachgeordnete Prüfungen durchgeführt. Ansonsten wird direkt zum Schritt 58 verzweigt, in dem eine Statusvariable auf den Wert "nicht in Ordnung" gesetzt wird. Werden hingegen alle Prüfungen erfolgreich abgeschlossen, wird im Schritt 59 die Statusvariable auf den Wert "in Ordnung" gesetzt.

Gemäß FIG 5 werden alle dort aufgeführten Prüfungen durchgeführt. Dies ist aber nicht zwingend erforderlich. Insbesondere die Prüfung auf Überlast und Kurzschluss der Verbraucher kann oftmals entfallen. Die Reihenfolge der durchgeführten Prüfungsschritte sollte aber beibehalten werden.

Gemäß FIG 6 wird zur Prüfung der Abschnitte 12 bis 27 auf Überlastung bei ordnungsgemäßem Arbeiten der Verbraucher 1 bis 5 zunächst in einem Schritt 60 die jeweiligen Nennströme berechnet. Bei der Ermittlung der Ströme werden dabei Phasenverschiebungen der in den Verbrauchern 1 bis 5 fließenden Ströme gegenüber der Spannungsversorgung berücksichtigt. Die Ströme werden dabei vorzugsweise komplex ermittelt, da sich hierdurch die weitere Berechnung vereinfacht. Aufgrund der Struktur des Leitungssystems - siehe FIG 1 - sind damit die in den zwischenabschnitten 13 und 17 sowie die in den Endabschnitten 18 bis 27 fließenden Ströme bekannt.

Sodann wird in einem Schritt 61 überprüft, ob mehrere der Verbraucher 1 bis 5 Einphasenverbraucher sind. Wenn ja, werden die Verbraucher in einem Schritt 62 zur Symmetrisierung der Lastverteilung auf die Phasen des Leitungssystems verteilt. Die Verteilung wird dann in einem Schritt 63 an den Anwender 38 ausgegeben.

Sodann werden in einem Schritt 64 die in den Zwischenabschnitten 14, 15 und 16 sowie der im Sammelabschnitt 12 fließende Summenstrom berechnet. Die Ermittlung erfolgt dabei in der Reihenfolge 14-15-16-12. Auch bei der Berechnung der Summenströme erfolgt selbstverständlich eine Berücksichtung etwaiger Phasenverschiebungen. Auch hier ist der Rechenaufwand am niedrigsten, wenn mit komplexen Strömen gerechnet wird. Dies ist insbesondere bezüglich der Zwischenabschnitte 14, 15 von Vorteil, da sich hierdurch der Rechenaufwand verringert.

Sodann wird in einem Schritt 65 für den Endabschnitt 27 der maximal für diesen Abschnitt zulässige Strom ermittelt. Hierzu wird wieder auf die Datei 39 zugegriffen. Aus der Datei 39 werden nämlich Tabellen ausgelesen, in denen aufgelistet ist, bei welchen Querschnitten in welchen Kabeln welcher Strom fließen darf. Es wird so zunächst ermittelt, welcher Strom grundsätzlich maximal im Endabschnitt 27 fließen darf. Ferner werden aus der Datei 39 Tabellen ausgelesen und ausgewertet, in denen für die jeweilige Kabelart Abhängigkeit von den Verlegebedingungen und der Betriebstemperatur Reduktionsfaktoren ermittelt werden, aufgrund derer der zunächst maximal zulässige Strom für den Abschnitt 27 verringert wird. Die Tabellen sind vorzugsweise empirisch ermittelt worden und werden in Form von Lookup-Tables in der Datei 39 gehalten.

Sodann wird in einem Schritt 66 geprüft, ob der so ermittelte maximal zulässige Strom überschritten wird. Wird der Strom nicht überschritten, wird in einem Schritt 67 überprüft, ob alle Abschnitte 12 bis 27 geprüft worden sind. Wenn ja, ist die Prüfung erfolgreich abgeschlossen. Die Routine wird daher in einem Schritt 68 beendet, wobei die Meldung, dass die Routine erfolgreich beendet wurde, ausgegeben wird. Ansonsten wird der nächste Abschnitt 12 bis 27 geprüft.

Falls der geprüfte Abschnitt unzureichend dimensioniert ist, wird zunächst in einem Schritt 69 geprüft, ob das Leitungssystem optimiert werden soll. Wenn nicht, wird die Routine in einem Schritt 70 verlassen, wobei mit zurück gemeldet wird, bei welcher Prüfung und in welchem der Abschnitte 12 bis 27 ein Dimensionierungsfehler aufgetreten ist.

Zur Verwendung in den Abschnitten 12 bis 27 stehen mehrere Kabelquerschnitte zur Verfügung. Wenn optimiert werden soll, wird daher in einem Schritt 71 gefragt, ob ein größerer Kabelquerschnitt für den momentan geprüften Abschnitt 27 zur Verfügung steht. Wenn ja wird für den Abschnitt 27 ein gleichartiges Kabel mit dem nächstgrößeren Querschnitt verwendet und erneut der Test gemäß Schritt 66 durchgeführt. In diesem Fall nimmt also der Rechner eine Neuzuordnung des Querschnitts vor. Ansonsten wird zum Schritt 70 gesprungen.

Gemäß FIG 7 wird zur Prüfung auf Auslegung der Abschnitte 12 bis 27 auf vorbestimmte Überlast zunächst in einem Schritt 73 für jeden der Abschnitte 12 bis 27 das vorgeordnete Schutzelement bestimmt. Für die Endabschnitte 19, 21, 23, 25 und 27 sind dies die jeweils unmittelbar vorgeordneten Schalt- und Schutzbausteine 7 bis 11. Für die anderen Abschnitte 12 bis 18, 20, 22, 24, 26 ist es der Speisebaustein 6. Falls beispielsweise in den Zwischenabschnitt 14 ein eigenes Schutzelement eingefügt sein sollte (dies ist in FIG 1 gestrichelt angedeutet), wäre dieses Schutzelement für die Endabschnitte 18 und 20, den Zwischenabschnitt 13 sowie den Zwischenabschnitt 14, soweit er mit den Abschnitten 13 und 20 verbunden ist, relevant.

Sodann werden in einem Schritt 74 anhand der Datei 39 die relevanten Parameter der jeweiligen Schutzelemente 6 bis 11 ausgelesen. Das Programm 37 ist somit in der Lage, die Schutzparameter der jeweiligen Bausteine 6 bis 11, hier zunächst ihren Nennstrom, den Überlastfaktor und die Überlastzeit, gegebenenfalls auch die zugehörigen Toleranzen, selbsttätig zu bestimmen. Sodann wird wieder für jeden Abschnitt in einem Schritt 75 der zulässige Maximalstrom ermittelt.

Anhand des Nennstroms, des Überlastfaktors, der Überlastzeit und des maximal zulässigen Stroms im jeweiligen Abschnitt 12 bis 27 wird dann in einem Schritt 76 überprüft, ob der betreffende Abschnitt 12 bis 27 die Überlast führen kann.

Die Schritte 75 und 76 korrespondieren für die Prüfung auf vorbestimmte Überlast mit den Schritten 65 und 66 auf Überlastung bei ordnungsgemäßen Arbeiten der Verbraucher. Der weitere Ablauf der Prüfung auf Überlastung bei vorbestimmter Überlast ist daher der gleiche wie vorstehend in Verbindung mit FIG 6 beschrieben. Von einer detaillierten Beschreibung wird daher nachfolgend abgesehen.

Zur Prüfung auf hinreichende Dimensionierung der Abschnitte 12 bis 27 im Falle eines Kurzschlusses in einem der Abschnitte 12 bis 27 wird gemäß FIG 8 zunächst wieder in Schritten 73 und 74 das vorgeordnete Schutzelement und dessen Schutzparameter - diesmal die Kurzschlussschutzparameter inklusive zulässiger Toleranzen - ermittelt. Im Rahmen von FIG 8 ist insbesondere eine Auslösekennlinie des vorgeordneten Schutzelements von Bedeutung.

Als nächstes wird in einem Schritt 77 die Kurzschlussschleife ermittelt, in der der Kurzschlussstrom fließt. Sodann werden in einem Schritt 78 anhand der Datei 39 die zulässigen Kurzschlusstemperaturen der einzelnen Kabelarten ermittelt undderen Minimum gebildet. Mit diesem Temperaturminimum werden Impedanzen der einzelnen Elemente der Kurzschlussschleife ermittelt und in einem Schritt 79 deren Summe gebildet. Ferner wird im Schritt 79 noch die Systemimpedanz des vorgeschalteten Netzes addiert. Aufgrund der so ermittelten Impedanz und der bekannten Netzspannung kann nunmehr in einem Schritt 80 der Kurzschlussstrom ermittelt werden. Anhand des Kurzschlussstroms kann schließlich - gegebenenfalls unter Berücksichtigung zulässiger Toleranzen - anhand der Auslösekennlinie die Auslösezeit des vorgeordneten Schutzelements in einem Schritt 81 ermittelt werden.

In einem Schritt 82 wird die so ermittelte Auslösezeit mit einer maximal zulässigen Auslösezeit verglichen. Je nach dem Ergebnis des Vergleichs werden - analog zu FIG 6 und 7 - wieder die Schritte 67 bis 70 durchlaufen. Anstelle der Schritte 71 und 72 werden gegebenenfalls geringfügig modifizierte Schritte 83 und 84 abgearbeitet: Im Schritt 83 wird geprüft, ob die gesamte Kurzschlussschleife bereits auf maximalen Querschnitt dimensioniert ist. Wenn ja, kann die Kurzschlussbedingung nicht erfüllt werden. Es wird zum Schritt 70 verzweigt. Ansonsten wird im Schritt 84, ausgehend vom Sammelabschnitt 12, der erste Querschnittsprung in der Kurzschlussschleife gesucht und der Querschnitt des Abschnitts hinter diesem Sprung um eine Stufe erhöht. Wird kein Querschnittsprung gefunden, wird im Schritt 84 der Querschnitt des Sammelabschnitts 12 um eine Stufe erhöht.

Eine Prüfung des dreipoligen Fehlerfalles ist im Rahmen der Kurzschlussauslösung nicht erforderlich. Denn der Kurzschlussstrom im dreipoligen Fehlerfall ist mindestens so groß wie der Kurzschlussstrom im einpoligen Fehlerfall. Wenn also eine rechtzeitige Abschaltung aufgrund eines einpoligen Kurzschlusses erfolgt, erfolgt erst recht eine rechtzeitige Abschaltung bei einem dreipoligen Kurzschluss.

Als nächstes ist zu prüfen, ob die Abschnitte 12 bis 27 im Kurzschlussfall thermisch überlastet sind. Es wird also nicht geprüft, ob der fließende Strom groß genug ist, um eine Kurzschlussabschaltung zu lösen. Dies wurde bereits obenstehend in Verbindung mit FIG 8 geprüft. Vielmehr wird geprüft, ob die Abschnitte 12 bis 27, die von einem Kurzschluss betroffen sind, diesen bis zur Abschaltung durch das vorgeschaltete Schutzelement auch verkraften.

Gemäß FIG 9 werden zunächst in einem Schritt 85 die Querschnitte und Materialfaktoren der betrachteten Kurzschlussschleife ermittelt. Die Querschnitte sind dabei aufgrund der gegebenen Konfiguration bereits bekannt. Die Materialfaktoren sind wieder der Datei 39 zu entnehmen. Sodann werden in einem Schritt 86 wieder die Impedanz, der Strom und die Auslösezeit für den einpoligen Kurzschlussfall ermittelt. Diese Tätigkeit entspricht der Zusammenfassung der Schritte 79 bis 81 gemäß FIG 8.

Sodann wird in einem Schritt 87 geprüft, ob die Abschnitte der Kurzschlussschleife überlastet sind. Es wird somit für jeden betroffenen Abschnitt 12 bis 27 geprüft, ob er die Bedingung k²S² ≥ I1² t1 erfüllt. k bzw. S sind dabei die relevanten Materialfaktoren und Querschnitte, 11 und tl der einpolige Kurzschlussstrom und die sich bei diesem Strom ergebende Auslösezeit. Wenn die Bedingung erfüllt ist, ist die Kurzschlussschleife im einpoligen Kurzschlussfall nicht überlastet. Dann wird in einem Schritt 88 auf analoge Weise eine Impedanz für den dreiphasigen Kurzschlussfall und ein sich daraus ergebender Kurzschlussstrom ermittelt. Anhand einer Tabelle für den vorgeschalteten Schutzbaustein ist dann ermittelbar welche Kurzschlussenergie I3²t3 dann von dem jeweiligen Abschnitt 12 bis 27 aufgenommen werden muss. Diese Kurzschlussenergie wird in einem Schritt 89 mit dem bereits im Schritt 87 berechneten Energieaufnahmevermögen k²S² der jeweiligen Leitung verglichen.

Je nach dem Ergebnis der beiden Vergleiche in den Schritten 87 und 89 kann entweder gemäß Schritt 67 fortgefahren werden, also entweder die Prüfung positiv beendet (Schritt 68) oder aber die nächste Kurzschlussschleife getestet werden. Im negativen Fall erfolgt gegebenenfalls gemäß den bekannten Schritten 69, 70, 83, 84 entweder eine Querschnittserhöhung oder aber ein Verlassen des Programms mit einer Fehlermeldung.

Zur Ermittlung des Spannungsfalls werden gemäß FIG 10 zunächst wieder die Schritte 60 und 64 ausgeführt. Es werden also für die Verbraucher 1 bis 5 die (komplexen) Nennströme und sodann für die Zwischenabschnitte 14 bis 16 und den Sammelabschnitt 12 die (komplexen) Summenströme ermittelt. Danach wird in einem Schritt 90 für jeden der Abschnitte 12 bis 27 seine Impedanz ermittelt. Aus den Impedanzen in Verbindung mit der bekannten Nennspannung wird dann für jeden der Abschnitte 12 bis 27 in einem Schritt 91 ein Spannungsfall ermittelt.

Schließlich wird in einem Schritt 92 für einen der Pfade vom Speisebaustein 6 zu einem der Verbraucher 1 bis 5 die Summe der sich ergebenden Spannungsfälle ermittelt. Diese Summe wird in einem Schritt 93 mit einem - absolut oder relativ vorbestimmten - Grenzwert verglichen. Je nach dem Ergebnis des Vergleichs wird entweder aufgrund der Schritte 66 und 67 der nächste Pfad untersucht bzw. nach Untersuchung aller Pfade das Programm mit einer Rückmeldung, dass die Spannungsfallbedingung für alle Pfade erfüllt ist, abgeschlossen. Alternativ erfolgt unter Abarbeitung der Schritte 69, 70, 83, 84 entweder eine Erhöhung eines Kabelquerschnitts entlang des Pfads, nämlich entweder am ersten Querschnittssprung oder am Sammelabschnitt 12, oder die Routine wird mit der Rückmeldung, dass die Spannungsfallbedingung nicht erfüllt ist, verlassen.

Diese Berechnungen werden nicht nur für das Hauptleitungssystem, sondern analog auch für die Hilfsleitungssysteme durchgeführt. Die Dimensionierungskriterien als solche, also z. B. das Überprüfen auf Überlastung bei Kurzschluss, können dabei dieselben bleiben. Die Prüfalgorithmen müssen selbstverständlich entsprechend angepasst werden. Die erhaltenen Daten, also die Spezifikationen der beteiligten Elemente 1 bis 11, 28, 29 sowie der Abschnitte 12 bis 27 und der entsprechenden Abschnitte der Hilfsleitungssysteme können nunmehr in der Datei 41 hinterlegt werden. In der Datei 41 werden dabei vorzugsweise auch alle Tabellen und sonstigen Kennlinien hinterlegt, auf die im Rahmen der Dimensionierung der Leitungssysteme zugegriffen wurde. Denn dadurch ist es möglich, bei einem späteren Aufruf der Datei 41 auch dann eine Überprüfung der Projektierung vorzunehmen, wenn die Katalogdatei 39 nicht zur Verfügung stehen sollte oder - z. B. aufgrund einer Aktualisierung - andere Daten enthalten sollte.

## Patentansprüche

1. Rechnergestütztes Prüfverfahren für ein bus- bzw. netzähnliches Leitungssystem, über das eine Anzahl elektrischer Verbraucher (1 - 5) aus einem Speisebaustein (6) mit Niederspannung versorgbar sein soll,
- wobei einem Rechner (30) eine Topologie des Leitungssystems eingegeben wird,
- wobei das Leitungssystem gemäß der Topologie mindestens einen Sammelabschnitt (12) aufweist, der zwischen dem Speisebaustein (6) und mindestens zwei der Verbraucher (1 -5) angeordnet ist, und pro Verbraucher (1 - 5) mindestens einen Einzelabschnitt (18 - 27) aufweist, der zwischen dem Sammelabschnitt (12) und diesem Verbraucher (1 - 5), aber keinem weiteren Verbraucher (1 - 5) angeordnet ist,
- wobei dem Sammelabschnitt (12) und den Einzelabschnitten (18 - 27) zumindest je eine eigene Länge und ein eigener Querschnitt und den Verbrauchern (1 - 5) Nennleistungen zugeordnet werden,
- wobei anhand der Niederspannung, der Nennleistungen und der Längen in Verbindung mit Dimensionierungskriterien für jeden Abschnitt (12 - 27) geprüft wird, ob der Querschnitt hinreichend dimensioniert ist, wobei die Dimensionierungskriterien eine Prüfung der Abschnitte (12 - 27) auf Überlastung bei ordnungsgemäßem Arbeiten der Verbraucher (1 - 5), bei vorbestimmter Überlast, bei Kurzschluss in den Abschnitten (12 - 27) bzw. in den Verbrauchern (1 - 5) und/oder einen Spannungsfall in den Abschnitten (12 - 27) umfassen.

2. Prüfverfahren nach Anspruch 1,
**dadurch gekennzeichnet,**
**dass** mindestens zwei der in Anspruch 2 genannten Prüfungen ausgeführt werden und dass die ausgeführten Prüfungen in der in Anspruch 2 genannten Reihenfolge ausgeführt werden.

3. Prüfverfahren nach Anspruch 1 oder 2,
**dadurch gekennzeichnet,**
- **dass** gemäß der Topologie mindestens zwei der Verbraucher (z. B. 1, 2) über einen gemeinsamen Zwischenabschnitt (z. B. 14) und mindestens ein weiterer Verbraucher (z. B. 3) nicht über den gemeinsamen Zwischenabschnitt (14) mit dem Sammelabschnitt (12) verbunden sind,
- **dass** auch dem Zwischenabschnitt (14) eine eigene Länge und eine eigener Querschnitt zugeordnet werden und
- **dass** anhand der Niederspannung, der Nennleistungen und der Längen in Verbindung mit den vorbekannten Dimensionierungskriterien auch für den Zwischenabschnitt (14) geprüft wird, ob er hinreichend dimensioniert ist.

4. Prüfverfahren nach Anspruch 3,
**dadurch gekennzeichnet,**
**dass** zuerst Abschnitte (13, 18 - 21), die zusammen mit dem Zwischenabschnitt (14) Verbraucher (1, 2) mit dem Sammelabschnitt (12) verbinden, auf hinreichende Dimensionierung geprüft werden und erst danach Abschnitte (22, 23), die ohne den Zwischenabschnitt (14) Verbraucher (3) mit dem Sammelabschnitt (12) verbinden, auf hinreichende Dimensionierung geprüft werden.

5. Prüfverfahren nach einem der obigen Ansprüche,
**dadurch gekennzeichnet,**
**dass** es selbsttätig eine Optimierung der Abschnitte (12 - 27) auf minimal hinreichende Dimensionierung vornimmt.

6. Prüfverfahren nach Anspruch 5,
**dadurch gekennzeichnet,**
**dass** die Optimierung der Abschnitte (12 - 27) durch Vorgabe eines entsprechenden Steuerbefehls ausgelöst bzw. unterdrückt wird.

7. Prüfverfahren nach einem der obigen Ansprüche,
**dadurch gekennzeichnet,**
**dass** auch den Abschnitten (12 - 27) zugeordnete Verlegebedingungen und/oder Betriebstemperaturen eingegeben werden und dass die Verlegebedingungen und/oder die Betriebstemperaturen bei der Prüfung der Abschnitte (12 - 27) auf hinreichende Dimensionierung berücksichtigt werden.

8. Prüfverfahren nach einem der obigen Ansprüche,
**dadurch gekennzeichnet,**
**dass** dem Rechner (30) für zumindest einen Teil der Verbraucher (1 - 5) je ein dem jeweiligen Verbraucher (1 - 5) vorgeordneter Schalt- und Schutzbaustein (7 - 11) vorgegeben wird.

9. Prüfverfahren nach Anspruch 8,
**dadurch gekennzeichnet,**
**dass** die Dimensionierungskriterien zumindest teilweise anhand von Schutzparametern der Schalt- und Schutzbausteine (7 - 11) bestimmt werden.

10. Prüfverfahren nach einem der obigen Ansprüche, **dadurch gekennzeichnet,**
**dass** die Verbraucher (1 - 5), ggf. auch die Schalt- und Schutzbausteine (7 - 11), aus einem vorgegebenen Katalog (39) selektierbar sind und dass Verbraucher- bzw. Schalt- und Schutzbausteinparameter, insbesondere die Nennleistung des Verbrauchers (1 - 5) bzw. die Schutzparameter des Schalt- und Schutzbausteins (7 - 11), durch die Selektion anhand des Katalogs (39) selbsttätig ermittelt werden.

11. Prüfverfahren nach einem der obigen Ansprüche, **dadurch gekennzeichnet,**
**dass** im Falle unzureichender Dimensionierung eine Fehlermeldung generiert wird, anhand derer ein nicht erfülltes Dimensionierungskriterium und/oder ein Fehlerort erkennbar ist.

12. Prüfverfahren nach einem der obigen Ansprüche, **dadurch gekennzeichnet,**
**dass** das geprüfte, ggf. optimierte, Leitungssystem als Datei (41), insbesondere als ASCII-Datei (41), hinterlegt wird.

13. Prüfverfahren,
**dadurch gekennzeichnet,**
**dass** ein Prüfverfahren nach einem der obigen Ansprüche für mindestens zwei Leitungssysteme durchgeführt wird und dass die Leitungssysteme zumindest den Speisebaustein (6) gemeinsam haben.

14. Prüfverfahren nach Anspruch 13,
**dadurch gekennzeichnet,**
**dass** die Leitungssysteme auch mindestens einen der Verbraucher (7 - 11) gemeinsam haben.

15. Prüfverfahren nach Anspruch 13,
**dadurch gekennzeichnet,**
**dass** mindestens einem der Verbraucher (z. B. 2, 4) des einen Leitungssystems ein Schalt- und Schutzbaustein (z. B. 8, 10) vorgeordnet ist und dass der Schalt- und Schutzbaustein (z. B. 8, 10) ein Verbraucher (8, 10) des anderen Leitungssystems ist.

16. Rechneraufbau (30, 31, 32, 33, 34, 35) zur Durchführung eines Prüfverfahrens nach einem der obigen Ansprüche.

## Claims

1. Computer-aided test method for a bus-like or network-like wiring system, via which it is intended to be possible to supply a number of electrical loads (1-5) with low voltage from a supply module (6),
- with a topology of the wiring system being entered in a computer (30),
- with the wiring system, based on the topology, having at least one bus section (12), which is arranged between the supply module (6) and at least two of the loads (1-5), and having at least one individual section (18-27) for each load (1-5), which individual section (18-27) is arranged between the bus section (12) and this load (1-5), but no further loads (1-5),
- with the bus section (12) and the individual sections (18-27) each having at least one associated dedicated length and at least one associated dedicated cross section, and the loads (1-5) having associated ratings,
- with the low voltage, the ratings and the lengths in conjunction with design criteria for each section (12-27) being used to test whether the cross section is adequately designed with the design criteria including a test of the sections (12-27) for overloading during correct operation of the loads (1-5), during a predetermined overload, during a short-circuit in the sections (12-27) or in the loads (1-5), and/or a voltage drop in the sections (12-27).

2. Test method according to Claim 1,
**characterized**
**in that** at least two of the tests mentioned in Claim 1 are carried out, and in that the tests that are carried out are carried out in the sequence mentioned in Claim 1.

3. Test method according to Claim 1 or 2,
**characterized**
- **in that**, in accordance with the topology, at least two of the loads (for example 1, 2) are connected to the bus section (12) via a common intermediate section (for example 14), and at least one further load (for example 3) is connected to the bus section (12), but not via the common intermediate section (14),
- **in that** the intermediate section (14) also has an associated dedicated length and an associated dedicated cross section, and
- **in that** the low voltage, the ratings and the lengths in conjunction with the previously known design criteria are also used to test whether the intermediate section (14) is adequately designed.

4. Test method according to Claim 3,
**characterized**
**in that** sections (13, 18-21) which connect loads (1, 2) to the bus section (12) together with the intermediate section (14) are tested first of all to determine whether they are adequately designed, and sections (22, 23) which connect loads (3) to the bus section (12) without the intermediate section (14) are only then tested to determine whether they are adequately designed.

5. Test method according to one of the above claims,
**characterized**
**in that** said test method automatically optimizes the sections (12-27) to ensure a minimum adequate design.

6. Test method according to Claim 5,
**characterized**
**in that** the optimization of the sections (12-27) is initiated or suppressed by presetting an appropriate control command.

7. Test method according to one of the above claims,
**characterized**
**in that** laying conditions and/or operating temperatures which are associated with the sections (12-27) are also entered, and
**in that** the laying conditions and/or the operating temperatures are taken into account during the testing of the sections (12-27), in order to determine whether they are adequately designed.

8. Test method according to one of the above claims,
**characterized**
**in that**, for at least some of the loads (1-5), in each case one switching and protection module (7-11), which is arranged upstream of the respective load (1-5), is specified for the computer (30).

9. Test method according to Claim 8,
**characterized**
**in that** at least some of the design criteria are determined on the basis of protection parameters of the switching and protection modules (7-11).

10. Test method according to one of the above claims,
**characterized**
**in that** the loads (1-5), and possibly also the switching and protection modules (7-11), can be selected from a predetermined catalog (39), and in that load parameters as well as switching and protection module parameters, in particular the rating of the load (1-5) and the protection parameters of the switching and protection module (7-11), are determined automatically by the selection from the catalog (39).

11. Test method according to one of the above claims,
**characterized**
**in that**, if the design is inadequate, a fault message is generated, on the basis of which a design criterion which is not satisfied and/or a fault location can be identified.

12. Test method according to one of the above claims,
**characterized**
**in that** the tested and possibly optimized, wiring system is stored as a file (41), in particular as an ASCII file (41).

13. Test method,
**characterized**
**in that** a test method according to one of the above claims is carried out for at least two wiring systems, and in that the wiring systems have at least the supply module (6) as a common item.

14. Test method according to Claim 13,
**characterized**
**in that** the wiring systems have at least one of the loads (7-11) as a common item.

15. Test method according to Claim 13,
**characterized**
**in that** a switching and protection module (for example 8, 10) is arranged upstream of at least one of the loads (for example 2, 4) in one wiring system, and in that the switching and protection module (for example 8, 10) is a load (8, 10) in the other wiring system.

16. Computer layout (30, 31, 32, 33, 34, 35) for carrying out a test method according to one of the above claims.

## Revendications

1. Procédé de contrôle informatique d'un système de ligne de bus ou analogue à un réseau, par lequel un certain nombre de consommateurs ( 1 à 5 ) électriques doit pouvoir être alimenté en basse tension à partir d'un module ( 6 ) d'alimentation,
- dans lequel on entre une topologie du système de ligne dans un ordinateur ( 30 ),
- dans lequel le système de ligne suivant la topologie a au moins un tronçon ( 12 ) collecteur qui est disposé entre le module ( 6 ) d'alimentation et au moins deux des consommateurs ( 1 à 5 ) et a, par consommateur ( 1 à 5 ), au moins un tronçon ( 18 à 27 ) individuel qui est disposé entre le tronçon ( 12 ) collecteur et ce consommateur ( 1 à 5 ), mais qui n'a pas d'autres consommateurs ( 1 à 5 ),
- dans lequel on associe au tronçon ( 12 ) collecteur et au tronçon ( 18 à 27 ) individuel, respectivement au moins une longueur propre et une section transversale propre et aux consommateurs ( 1 à 5 ) des puissances nominales,
- dans lequel au moyen de la basse tension, des puissances nominales et des longueurs en liaison avec des critères de dimensionnement de chaque tronçon ( 12 à 27 ), on contrôle si la section transversale a des dimensions suffisantes, les critères de dimensionnement comprenant un contrôle de la surcharge des tronçons ( 12 à 27 ), lorsque les consommateurs ( 1 à 5 ) opèrent normalement, lors d'une surcharge déterminée à l'avance, lors d'un court-circuit dans les tronçons ( 12 à 27 ) ou dans les consommateurs ( 1 à 5 ) et/ou lors d'une chute de tension dans les tronçons ( 12 à 27 ).

2. Procédé de contrôle suivant la revendication 1,
**caractérisé**
**en ce que** l'on effectue au moins deux des contrôles mentionnés à la revendication 1 et en ce qu'on exécute les contrôles mentionnés dans la succession indiquée à la revendication 1.

3. Procédé de contrôle suivant la revendication 1 ou 2,
**caractérisé**
- lorsque suivant la topologie au moins deux des consommateurs ( par exemple 1, 2 ) sont reliés au tronçon ( 12 ) collecteur par un tronçon ( par exemple 14 ) intermédiaire commun et au moins un autre consommateur ( par exemple 3 ) n'est pas relié au tronçon ( 12 ) collecteur par le tronçon ( 14 ) intermédiaire commun,
- en ce qu'on associe également une longueur propre et une section transversale propre au tronçon ( 14 ) intermédiaire et
- en ce qu'au moyen de la basse tension, des puissances nominales et des longueurs en liaison avec les critères de dimensionnement connus à l'avance, on contrôle également le tronçon ( 14 ) intermédiaire pour savoir s'il a des dimensions suffisantes.

4. Procédé de contrôle suivant la revendication 3,
**caractérisé,**
**en ce que** l'on contrôle d'abord des tronçons ( 13, 18 à 21 ) qui, ensemble avec le tronçon ( 14 ) intermédiaire, relie des consommateurs ( 1, 2 ) au tronçon ( 12 ) collecteur pour savoir s'ils ont un dimensionnement suffisant et l'on ne contrôle qu'ensuite des tronçons ( 22, 23 ) qui relient sans le tronçon ( 14 ) intermédiaire des consommateurs ( 3 ) au tronçon ( 12 ) collecteur pour savoir s'ils ont un dimensionnement suffisant.

5. Procédé de contrôle suivant l'une des revendications précédentes,
**caractérisé**
**en ce qu'**il s'effectue automatiquement une optimisation du dimensionnement minimum suffisant des tronçons ( 12 à 27 ).

6. Procédé de contrôle suivant la revendication 5,
**caractérisé**
**en ce que** l'on déclenche ou supprime l'optimisation des tronçons ( 12 à 27 ) par prescription d'un ordre de commande correspondant.

7. Procédé de contrôle suivant l'une des revendications précédentes,
**caractérisé**
**en ce que** l'on entre également des conditions de pose et/ou des températures de fonctionnement associées aux tronçons ( 12 à 27 ) et en ce que l'on tient compte des conditions de pose et/ou de températures de fonctionnement lors du contrôle du dimensionnement suffisant des tronçons ( 12 à 27 ).

8. Procédé de contrôle suivant l'une des revendications précédentes,
**caractérisé**
**en ce que** l'on prescrit à l'ordinateur ( 30 ), pour au moins une partie des consommateurs ( 1 à 5 ), respectivement un module ( 7 à 11 ) de commutation et de protection monté en amont de chaque consommateur ( 1 à 5 ).

9. Procédé de contrôle suivant la revendication 8,
**caractérisé**
**en ce que** l'on détermine les critères de dimensionnement, au moins en partie, au moyen de paramètres de protection des modules ( 7 à 11 ) de commutation et de protection.

10. Procédé de contrôle suivant l'une des revendications précédentes,
**caractérisé**
**en ce que** l'on peut sélectionner des consommateurs ( 1 à 5 ), le cas échéant, aussi les modules ( 7 à 11 ) de commutation et de protection dans un catalogue ( 39 ) prescrit et en ce qu'on détermine automatiquement, par la sélection au moyen du catalogue ( 39 ), des paramètres de consommateur ou de module de connexion et de protection, notamment la puissance nominale du consommateur ( 1 à 5 ) ou les paramètres de protection du module ( 7 à 11 ) de commutation et de protection.

11. Procédé de contrôle suivant l'une des revendications précédentes,
**caractérisé**
**en ce que**, dans le cas d'un dimensionnement insuffisant, on produit un message de défaut au moyen duquel on peut reconnaître qu'un critère de dimensionnement n'est pas satisfait et/ou une localisation d'un défaut.

12. Procédé de contrôle suivant l'une des revendications précédentes,
**caractérisé**
**en ce que** l'on mémorise le système de ligne contrôlé, le cas échéant optimisé, sous forme de fichiers ( 41 ), notamment de fichiers ( 41 ) ASCII.

13. Procédé de contrôle,
**caractérisé**
**en ce que** l'on effectue un procédé de contrôle suivant l'une des revendications précédentes, pour au moins deux systèmes de ligne et en ce que les systèmes de ligne ont en commun au moins le module ( 6 ) d'alimentation.

14. Procédé de contrôle suivant la revendication 13,
**caractérisé**
**en ce que** les systèmes de ligne ont aussi en commun, au moins l'un des consommateurs ( 7 à 11 ).

15. Procédé de contrôle suivant la revendication 13,
**caractérisé**
**en ce que** est monté en amont d'au moins l'un des consommateurs, ( par exemple 2, 4 ) de l'un des systèmes de ligne, un module ( par exemple 8, 10 ) de commutation et de protection et en ce que le module ( par exemple 8, 10 ) de commutation et de protection est un consommateur ( 8, 10 ) de l'autre système de ligne.

16. Structure ( 30, 31, 32, 33, 34, 35 ) informatique pour la mise en oeuvre d'un procédé de contrôle suivant l'une des revendications précédentes.
